# EUROPEAN PATENT SPECIFICATION

(11) **EP 4 520 593 B1**
(45) Date of publication and mention of the grant of the patent: **14.10.2026**
(21) Application number: 24192886.0
(22) Date of filing: 05.08.2024
(51) Int. Cl.: B60R 1/26, B60R 11/04, B60Q 7/02, B60Q 1/26

(54) **VEHICLE CAMERA SYSTEM**
FAHRZEUGKAMERASYSTEM
VEHICULE AVEC SYSTEME DE CAMERA

(30) Priority: 06.09.2023 GB 202313586
(43) Date of publication of application: 12.03.2025
(60) Divisional application: 26197689.8 / 4 810 318
(73) Proprietor: AGCO International GmbH, 8212 Neuhausen am Rheinfall (CH)
(72) Inventor: FREYTAG, Erich, 87616 Marktoberdorf (DE)
(74) Representative: AGCO Intellectual Property Department

(56) References cited:
- DE-U1- 9 007 069
- US-A1- 2008 157 945
- US-A1- 2018 354 413
- US-A1- 2022 332 243

## Description

### FIELD

Embodiments of the present disclosure generally relate to a vehicle with a rear-view camera system.

### BACKGROUND

Certain types of vehicles, including for example tractors and other vehicles used for transporting goods or construction, may have a maximum width that is over a specified legal limit for road use, typically above around 3 metres. This may require the vehicle to have additional signage, known as wide vehicle markers, which warn other road users of the wide vehicle. The view of a driver of the vehicle may be restricted when the vehicle or its load, for example on a trailer, is above a certain width, requiring either additional mirrors or mirrors that can be adjusted outwards to enable the driver to have full view behind the vehicle and any trailer load. A problem with such solutions is that the mirrors may interfere with other components of the vehicle, for example with the exhaust stackpipe of a tractor, may obstruct the driver's view during forward travel and may have an increased risk of interfering with obstacles around from the vehicle when travelling. DE 9007069 U1 discloses a vehicle according to the preamble of claim 1.

### BRIEF SUMMARY

According to the invention there is provided a vehicle comprising first and second arms extending from a left side and a right side respectively of the vehicle, each of the arms having a warning sign at an outward end and a camera assembly located adjacent an outer edge of the warning sign, wherein the camera assembly is configured to provide a field of view directed behind the vehicle in at least one configuration.

Each arm may be rotatably mounted to the vehicle such that the warning sign and camera assembly is foldable inwards towards the vehicle to a stowed position and outwards from the vehicle to a deployed position, wherein the arm and the camera assembly are configured such that the camera assembly provides a field of view directed behind the vehicle in at least one configuration when the arm is in the deployed position.

Each warning sign may be rotatably mounted to a respective one of the arms such that the warning sign and camera assembly is foldable inwards towards the vehicle to a stowed position and outwards from the vehicle to a deployed position, wherein the arm and the camera assembly are configured such that the camera assembly provides a field of view directed behind the vehicle in at least one configuration when the arm is in the deployed position.

Each arm may be rotatably mounted for rotation relative to the vehicle about a substantially vertical axis.

The warning sign according to the invention is a wide vehicle marker.

The vehicle may have a maximum width of 3 metres or over, the warning signs being arranged to extend to the maximum width on opposing sides of the vehicle.

The vehicle may be a tractor, with the arms extending outwardly from a cab of the tractor.

The vehicle may comprise a visual monitor located in the cab and connected to receive and display images from each camera assembly.

The visual monitor may comprise first and second visual monitors mounted to respective left and right front pillars of the cab, each of the first and second visual monitors configured to receive an image from a respective one of the camera assemblies.

The cab may comprise a driver's seat that is rotatable between a forward facing configuration and a rearward facing configuration, wherein the control system is configured to display the images from each camera assembly on the visual monitor when the driver's seat is in the rearward facing configuration.

The visual monitor may be rotatable with the seat. The visual monitor may alternatively comprise first and second visual monitors mounted to respective left and right rear pillars of the cab, each of the first and second visual monitors configured to receive an image from a respective one of the camera assemblies when the seat is in the rearward facing configuration.

The camera assembly may be configured to provide a field of view in front of the vehicle in at least one other configuration and the control system may be configured to display the images of the field of view in front of the vehicle from each camera assembly on the visual monitor when the driver's seat is in the rearward facing configuration.

The arms may extend over left and right rear wheel fenders of the vehicle.

Each camera assembly may be rotatably mounted to an end of a respective arm.

Each camera assembly may be rotatable relative to a respective arm about a substantially horizontal camera rotation axis.

Each camera assembly may comprise a first camera having a rear facing field of view and a second camera having a forward facing field of view.

The vehicle may further comprise an indicator light assembly at an outward end of each arm.

The indicator light assembly may comprise a forward facing indicator light and a rearward facing indicator light.

Within the scope of this application, it should be understood that the various aspects, embodiments, examples and alternatives set out herein, and individual features thereof may be taken independently or in any possible and compatible combination. Where features are described with reference to a single aspect or embodiment, it should be understood that such features are applicable to all aspects and embodiments unless otherwise stated or where such features are incompatible.

### BRIEF DESCRIPTION OF THE DRAWINGS

One or more embodiments of the invention / disclosure will now be described, by way of example only, with reference to the accompanying drawings, in which:
FIG. 1a is a side view drawing of an example vehicle with an articulated trailer;
FIG. 1b is a plan view of the vehicle and articulated trailer of FIG. 1a;
FIG. 2a is a drawing of an example vehicle having a wide vehicle marker assembly;
FIG. 2b is a of close up drawing of the wide vehicle marker of FIG. 2a;
FIG. 3 is drawing of a further example vehicle with a wide vehicle marker assembly;
FIG. 4 is a drawing illustrating a rear-view of the wide vehicle marker assembly of FIG. 3;
FIG. 5 is a drawing illustrating a front view of the wide vehicle marker assembly of FIG. 3;
FIG. 6 is a drawing illustrating a front view of an alternative wide vehicle marker assembly;
FIG. 7 is a drawing illustrating a rear-view of the alternative wide vehicle marker assembly of FIG. 6;
FIG. 8 is a drawing illustrating a rear-view of a further alternative wide vehicle marker assembly; and
FIG. 9 is a drawing illustrating an example cab layout for a vehicle.

### DETAILED DESCRIPTION

Within the scope of this application, it should be understood that the various aspects, embodiments, examples and alternatives set out herein, and individual features thereof may be taken independently or in any possible and compatible combination. Where features are described with reference to a single aspect or embodiment, it should be understood that such features are applicable to all aspects and embodiments unless otherwise stated or where such features are incompatible.

The illustrations presented herein are not actual views of any vehicle, machine, sensor, or portion thereof, but are merely idealized representations that are employed to describe example embodiments of the present disclosure. Additionally, elements common between figures may retain the same numerical designation.

The following description provides specific details of embodiments of the present disclosure in order to provide a thorough description thereof. However, a person of ordinary skill in the art will understand that the embodiments of the disclosure may be practiced without employing many such specific details. Indeed, the embodiments of the disclosure may be practiced in conjunction with conventional techniques employed in the industry. In addition, the description provided below does not include all elements to form a complete structure or assembly. Only those process acts and structures necessary to understand the embodiments of the disclosure are described in detail below. Additional conventional acts and structures may be used. The drawings accompanying the application are for illustrative purposes only, and are thus not drawn to scale.

As used herein, the terms "comprising," "including," "containing," "characterized by," and grammatical equivalents thereof are inclusive or open-ended terms that do not exclude additional, unrecited elements or method steps, but also include the more restrictive terms "consisting of" and "consisting essentially of" and grammatical equivalents thereof.

As used herein, the term "may" with respect to a material, structure, feature, or method act indicates that such is contemplated for use in implementation of an embodiment of the disclosure, and such term is used in preference to the more restrictive term "is" so as to avoid any implication that other, compatible materials, structures, features, and methods usable in combination therewith should or must be excluded.

As used herein, the term "configured" refers to a size, shape, material composition, and arrangement of one or more of at least one structure and at least one apparatus facilitating operation of one or more of the structure and the apparatus in a predetermined way.

As used herein, the singular forms following "a," "an," and "the" are intended to include the plural forms as well, unless the context clearly indicates otherwise.

As used herein, the term "and/or" includes any and all combinations of one or more of the associated listed items.

As used herein, spatially relative terms, such as "beneath," "below," "lower," "bottom," "above," "upper," "top," "front," "rear," "left," "right," and the like, may be used for ease of description to describe one element's or feature's relationship to another element(s) or feature(s) as illustrated in the figures. Unless otherwise specified, the spatially relative terms are intended to encompass different orientations of the materials in addition to the orientation depicted in the figures.

As used herein, the term "substantially" in reference to a given parameter, property, or condition means and includes to a degree that one of ordinary skill in the art would understand that the given parameter, property, or condition is met with a degree of variance, such as within acceptable manufacturing tolerances. By way of example, depending on the particular parameter, property, or condition that is substantially met, the parameter, property, or condition may be at least 90.0% met, at least 95.0% met, at least 99.0% met, or even at least 99.9% met.

As used herein, the term "about" used in reference to a given parameter is inclusive of the stated value and has the meaning dictated by the context (e.g., it includes the degree of error associated with measurement of the given parameter).

As used herein, refences to "behind the vehicle" and the like should be understood as referring to a direction to the rear of the vehicle as that term would be understood with the vehicle travelling in its normal forward direction, regardless of whether the vehicle is stationary, traveling in its normal forward direction, or travelling in reverse. Similarly, as used herein, references to "in front of the vehicle" and the like should be understood as referring to a direction to the front of the vehicle as that term would be understood with the vehicle travelling in its normal forward direction, regardless of whether the vehicle is stationary, traveling in its normal forward direction, or travelling in reverse.

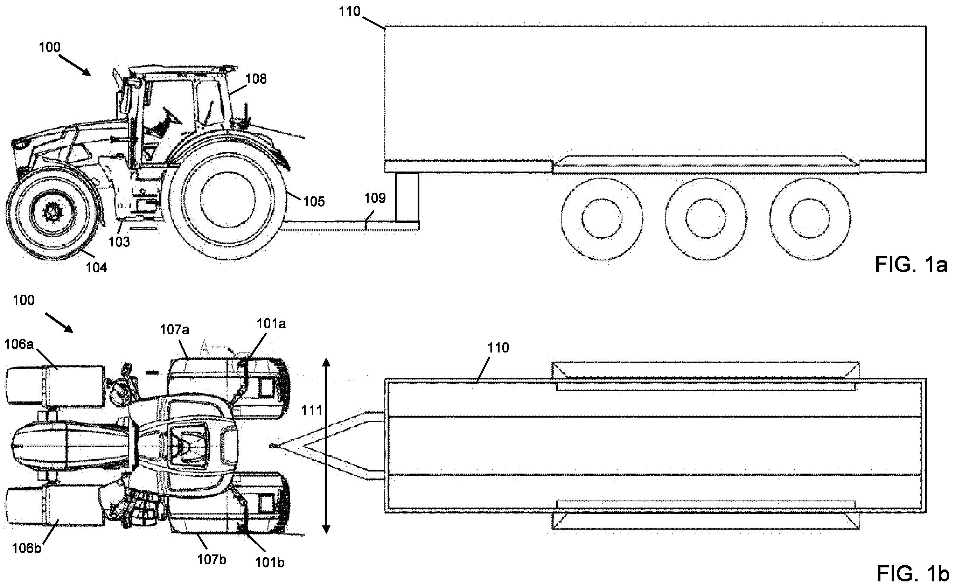

FIGs. 1a and 1b illustrate inside and plan views respectively an example vehicle, in this case a tractor 100, with a trailer 110 that is attachable to the tractor 100 via a trailer hitch 109. The tractor 100 and trailer 110 have a maximum width 111 that is over a legal limit, for example 3 metres, and therefore requires wide vehicle markers 101a, 101b to be attached to the vehicle 100 that extend to the maximum width 111 of the vehicle 100. Examples of such wide vehicle markers 101a, 101b are illustrated in more detail in subsequent drawings.

The tractor 100 comprises a chassis 103 on which front wheels 104 and rear wheels 105 are mounted. Front wheel fenders 106a, 106b are mounted above the front wheels 105 and rear wheel fenders 107a, 107b are mounted above the rear wheels 105. The vehicle 100 can be operated by a driver from within a cab 108, which is also mounted on the chassis 103. The wide vehicle markers extend to the left and right sides of the vehicle 100 may be attached to either side of the cab 108, extending over the rear wheel fenders 107a, 107b.

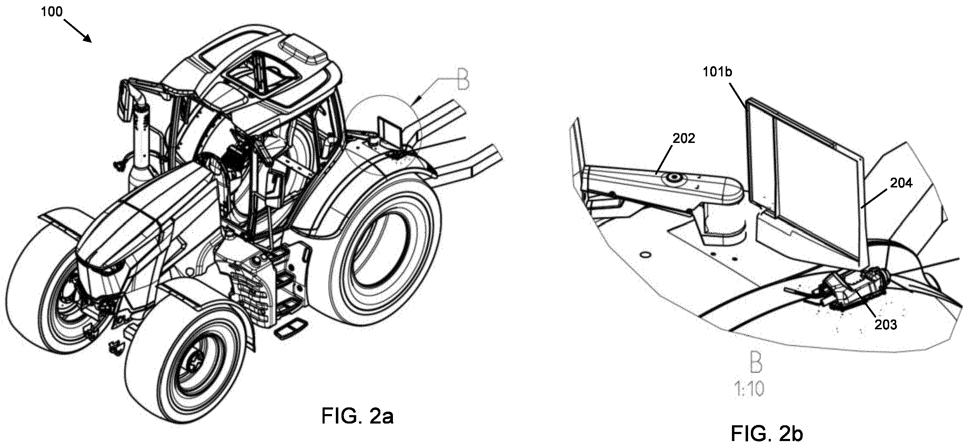

FIG. 2a illustrates the example vehicle 100 from a different view to that of FIGs. 1a and 1b, with FIG. 2b showing a close-up view of the portion of the vehicle 100 around one of the wide vehicle markers 101b. The wide vehicle marker, or warning sign, 101b is located at an outward end of an arm 202 that extends from a side of the vehicle 100, in this case the left side of the vehicle 100. The arm 202 is rotatably mounted to the vehicle 100 such that the warning sign 101b is foldable inwards towards the vehicle 100 to a stowed position and outwards from the vehicle to a deployed position, which is the position shown in FIG. 2b. Alternatively, or additionally, the warning sign 101b may be rotatably mounted to the arm 202 to allow the warning sign 101b to be similarly folded inwards and outwards.

Attached to an outer edge of the warning sign 101b is a camera assembly 203. which is located adjacent an outer edge 203 of the warning sign 101b. The camera assembly 203 is arranged to have a field of view that is directed behind the vehicle, at least when the arm is in its deployed position. Because the camera assembly 203 is provided on an outer edge 204 of the warning sign 101b, it will necessarily be in a position to have a field of view that complies with wide vehicle requirements, since the warning signs need to be positioned such that they extend to the maximum width of the vehicle 100.

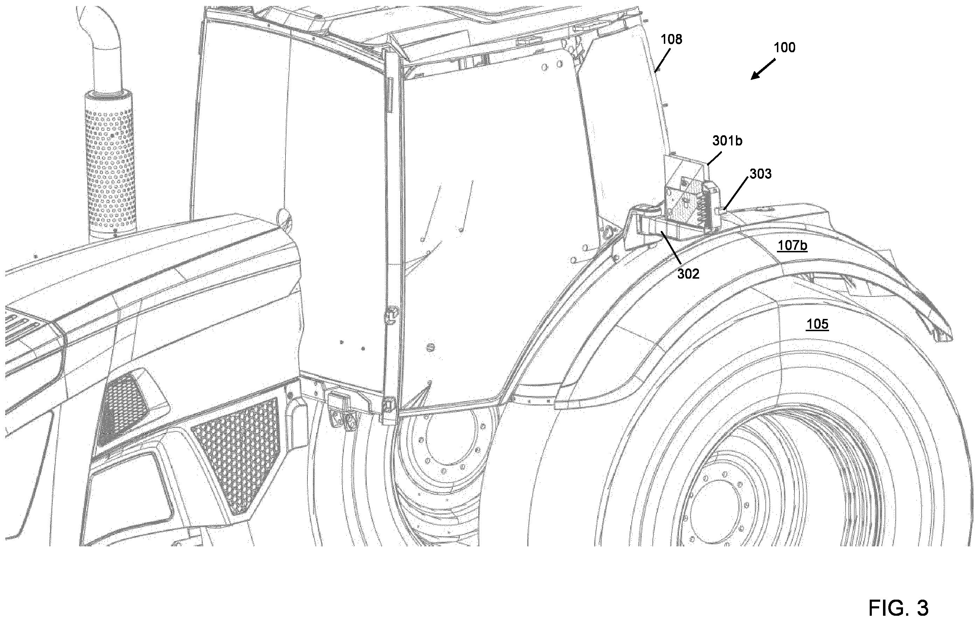

FIG. 3 illustrates a further view of a vehicle 100 with a warning sign 301b that is attached to an arm 302. The arm 302 is rotatably mounted to the cab 108 of the vehicle such that the warning sign 301b and camera assembly 303 is foldable inwards towards the cab to a stowed position and outwards from the cab to a deployed position, i.e., the position shown in FIG. 3. When the arm is in its deployed position, the system is configured to orient the camera assembly to have a view directed behind the vehicle 300. The warning sign 301b and arm 302 extend over a left rear wheel fender 107b of the vehicle 100.

A warning or indicator light may also be attached to the arm along with the warning sign and camera assembly.

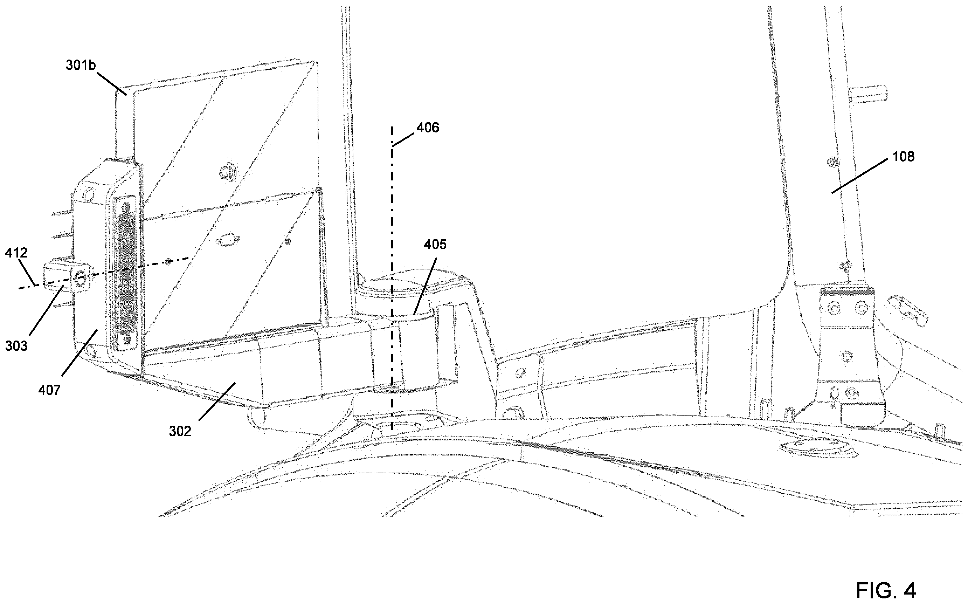

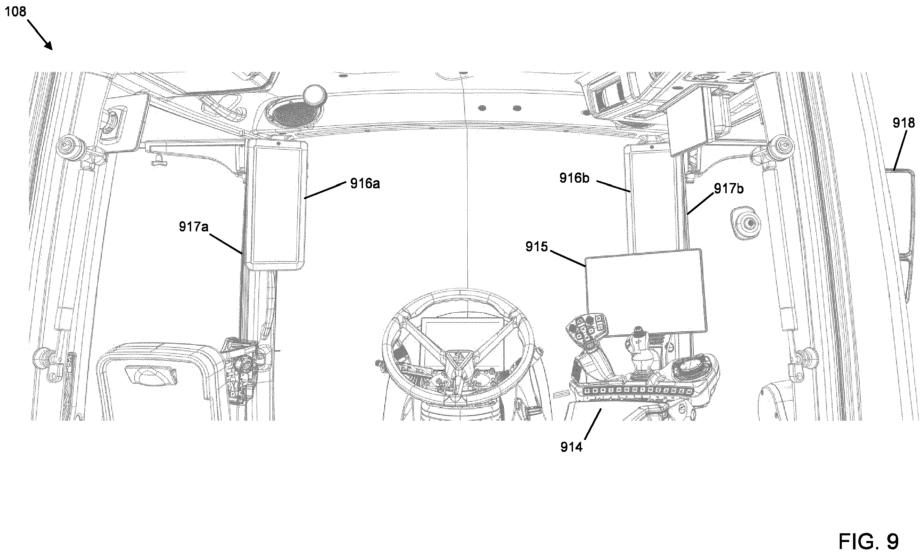

FIG. 4 illustrates a closer view from the rear of the warning sign 301b of FIG. 3. The arm 302 is rotatably mounted about pivot mount 405 to allow the arm 302 to rotate about a substantially vertical axis 405 relative to the cab 108. A warning or indicator light assembly 407 is mounted to the outward end of the arm, with the camera assembly 303 mounted to the indicator light assembly 407. The camera assembly 303 may be rotatably mounted such that the camera assembly 303 is rotatable relative to the arm 302 about a substantially horizontal camera rotation axis 412, to allow the field of view of the camera assembly 303 to be adjusted. The camera assembly 303 may for example be rotated to be front-facing rather than rear-facing so as to provide a field of view in front of the vehicle 100. The camera assembly 303 may include an actuator to rotate the camera assembly. The actuator may be operated under control of a control system, such as the control system 914 described below with reference to Fig. 9.

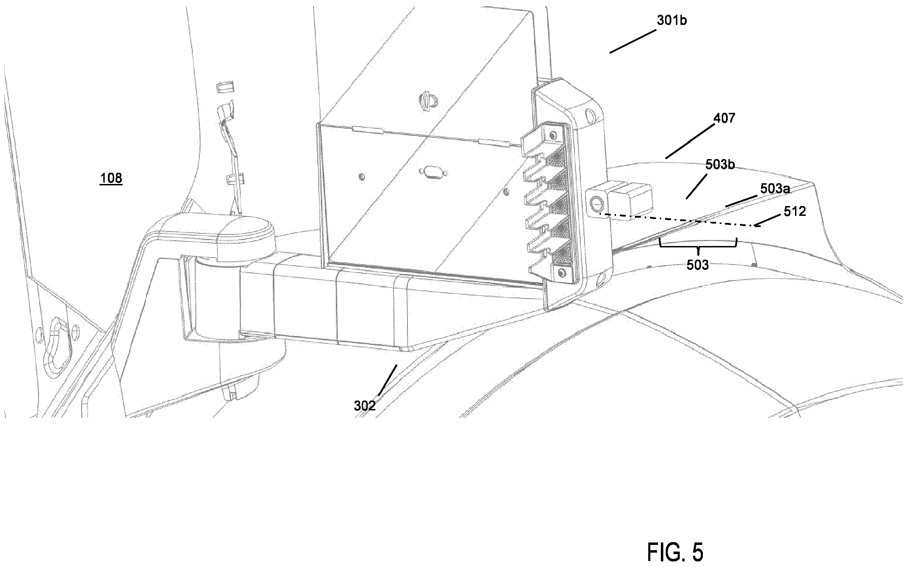

FIG. 5 illustrates a front view of a warning sign 301b mounted to an arm 302 extending from the cab 108 of a vehicle. In this example, the camera assembly 503 comprises a first rear-facing camera 503a and a second forward-facing camera 503b. The arrangement is otherwise similar to that of FIG. 4. Each of the cameras 503a, 503b may be rotatably mounted to rotate about a substantially horizontal camera rotation axis 512. In a further alternative, a single camera may have multiple lenses. These might include a lens providing a field of view behind the vehicle and another lens providing a field of view in front of the vehicle. However, other lens arrangements can be adopted and there may be more than two lenses. The field of view of two or more lenses may be combined in a single composite image of the camera assembly.

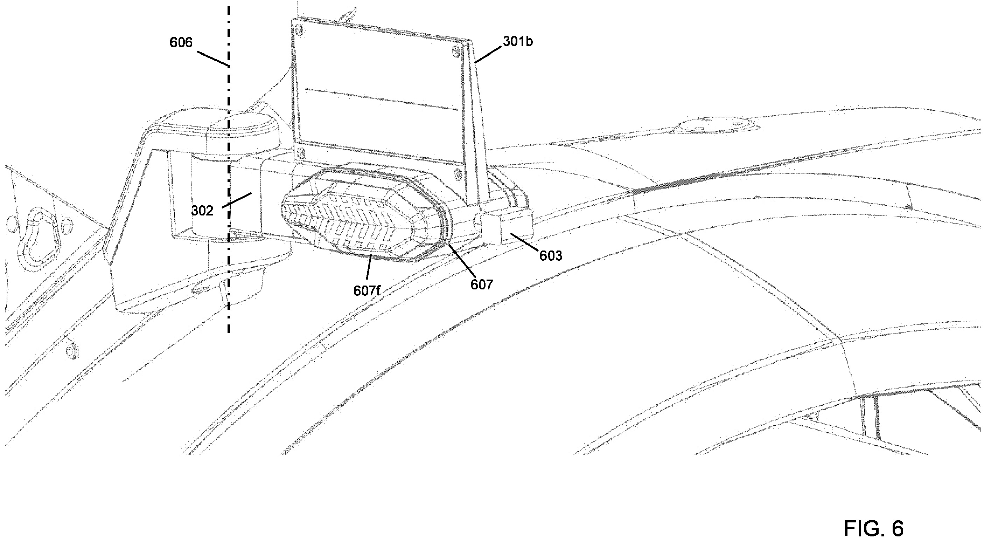

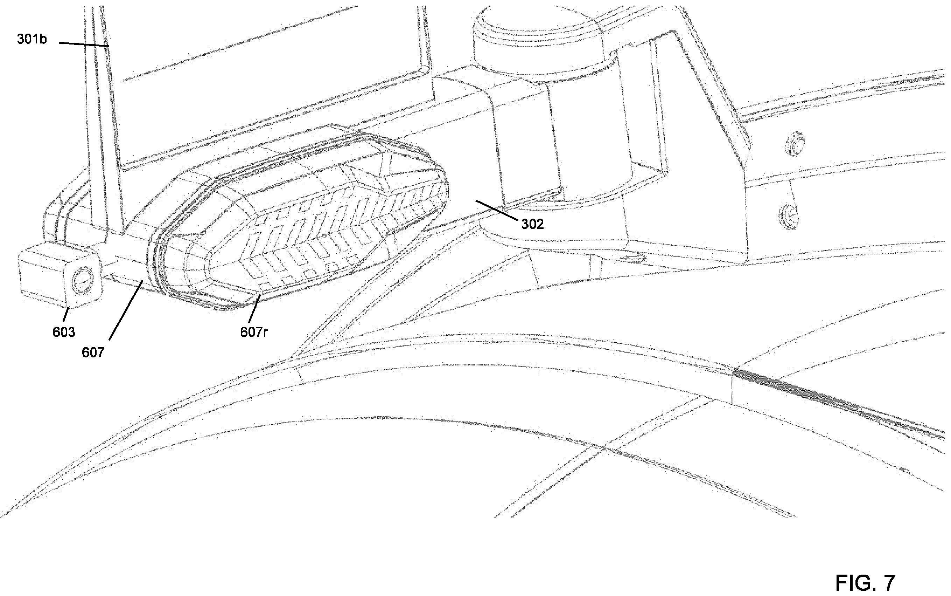

FIG. 6 illustrates a front view, and FIG. 7 a rear-view, of a warning sign 301b at an outward end of an arm 302 with a camera assembly 603 mounted to an end of the arm 302. In this example, an indicator light assembly 607 is located at an outward end of the arm 302. The indicator light assembly 607 comprises a forward facing indicator light 607f and a rearward facing indicator light 607r. An advantage of this arrangement is that the wiring for the camera assembly 603 can be bundled together with the wiring for the indicator assembly 607.

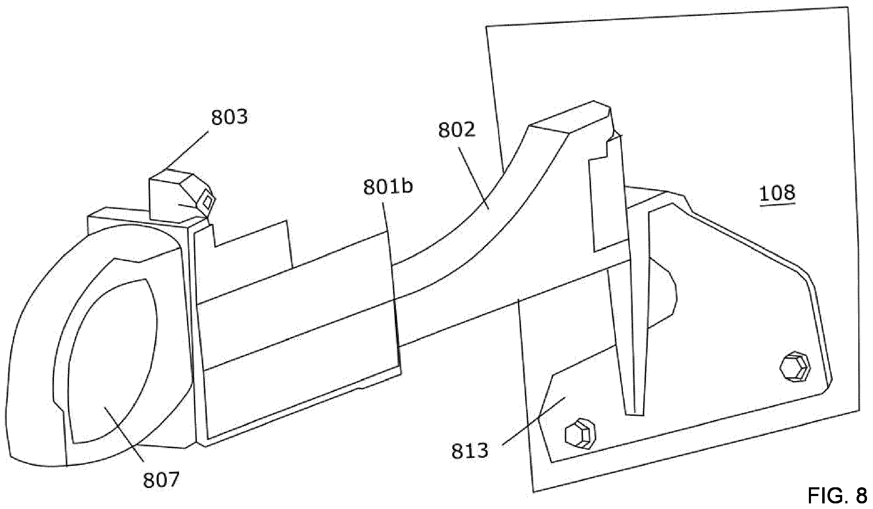

FIG. 8 illustrates a rear-view of a further example assembly comprising a warning sign 801b at an outward end of an arm 802 extending from a left side of a cab 108. The arm 802 is pivotably mounted to a bracket 813 that is fixed to the cab 108. In this example, an indicator light assembly 807 extends outwardly from the end of the arm 802 to which a camera assembly 803 is mounted. The bracket 813 could be mounted to the cab 108 itself or to any other suitable component provided the arm 802 extends out laterally beyond the side of the cab 108 in the operative position and will usually be located above the rear fender 107b.

In any of the embodiments of FIGs. 6 to 8, the camera assembly 603, 803 could be adapted so that it can also provide a field of view to the front of the vehicle. To this end, the camera assembly 603, 803 may include a single rotatable camera similar to that described above in relation to FIG. 4, dual cameras as described above in relation to FIG. 5, or a camera with multiple lenses to provide both rear facing and forward facing fields of view.

FIG. 9 is a drawing illustrating an interior layout of an example cab 108 of a vehicle, such as the vehicle 100 described above. The cab 108 contains a control system 914 for the vehicle, which is connected to a monitor 915. The control system 914 is connected to receive image signals from a camera assembly on either side of the vehicle and selectively display images on additional visual monitors 916a, 916b. The additional monitors 916a, 916b shown in FIG. 9 are mounted to respective front pillars 917a, 917b of the cab 108, which provides an unrestricted view for the driver of the vehicle, removing the need for mirrors being positioned further out from the cab 108 and allowing for an improved overall field of view for the driver. A rear-view mirror 918 is partially visible in FIG. 9, illustrating the difficulty in providing a clear field of view for the driver using conventional rear-view mirrors for a wide vehicle. Where a rear-view from the camera assembles is provided on the monitor 915 or monitors 916a, 916b, the rear-view mirror 918 can be omitted. The left and right additional visual monitors 916a, 916b may be used to display images from camera assemblies 303, 503, 603, 803 on the left and right hand side of the vehicle respectively.

Where the camera assembly includes a rotatable camera, the control system 914 may be configured to selectively control rotation of the camera assemble to provide for a field of view behind or in front of the vehicle in dependence on at least one operating condition of the vehicle and/or in dependence on an input by the driver.

Where the camera assembly includes dual cameras or a camera with multiple lenses, the control system 914 may be configured to selectively display the field of view behind the vehicle, the field of view in front of the vehicle, or a combination of both in dependence on at least one operating condition of the vehicle and/or in dependence on an input by the driver.

For example, the camera assemblies may be used to provide a rear-view for the driver of the vehicle when the vehicle is being driven in a backward facing position by providing images from a field of view in front of the vehicle. This may be possible by either rotating each camera assembly or, as is described above in relation to FIG. 5, having both a front facing and rear facing camera in each assembly or multiple lenses. The driver's seat may in some examples be rotatable such that the driver can operate the vehicle while facing backwards in what is often referred to as a reverse driving configuration. This is advantageous when for example operating an implement at the rear of the vehicle that needs to be carefully monitored, which the driver can do more easily when in the reverse driving configuration. Depending on the nature of the operation being carried out, the vehicle may be driven in its reverse direction or its normal forward direction with the seat in the reverse driving configuration. If the vehicle is being driven in its usual forward direction, it can be helpful to be able to provide the operator with a view to the front of the tractor, which will be behind the driver. When in the reverse driving configuration, the camera assemblies can be controlled via the control system 914 to provide the driver with a view to their rear, i.e., to the front of the tractor. The display 915 connected to the control system 914 may be used to provide this rear (from the driver's perspective) view. Alternatively, additional displays (not shown in FIG. 9, but of similar configuration to the displays 916a, 916b) may be located at the rear of the cab facing forwards, for example being mounted to rear pillars of the cab 108, and which can be operated by the control system 914 to display images from the camera assemblies when in the reverse driving configuration.

## Claims

1. A vehicle (100) comprising:
first and second arms (202; 302; 802) extending from a left side and a right side respectively of the vehicle, each of the arms having a warning sign (101a, 101b; 301b; 801b) at an outward end, wherein the warning sign is a wide vehicle marker;
**characterised in that**:
each of the arms has a camera assembly (203; 303; 503; 603; 803) located adjacent an outer edge (204) of the warning sign wherein the camera assembly is configured to provide a field of view directed behind the vehicle at least in one configuration, and
the vehicle (100) further comprises a visual monitor (915) located in a cab of the vehicle and configured to receive images from each camera assembly.

2. The vehicle (100) of claim 1, wherein each arm (202; 302; 802) is rotatably mounted to the vehicle such that the warning sign (101a, 101b; 301b; 801b) and camera assembly (203; 303; 503; 603; 803) is foldable inwards towards the vehicle to a stowed position and outwards from the vehicle to a deployed position, wherein the arm and the camera assembly are configured such that the camera assembly provides a field of view directed behind the vehicle in at least one configuration when the arm is in the deployed position.

3. The vehicle (100) of claim 1 or claim 2, wherein each warning sign (101a, 101b; 301b; 801b) is rotatably mounted to a respective one of the arms (202; 302; 802) such that the warning sign and camera assembly (203; 303; 503; 603; 803) is foldable inwards towards the vehicle to a stowed position and outwards from the vehicle to a deployed position, wherein the arm and the camera assembly are configured such that the camera assembly provides a field of view directed behind the vehicle in at least one configuration when the arm is in the deployed position.

4. The vehicle (100) of claim 2, wherein each arm (202; 302; 802) is rotatably mounted for rotation relative to the vehicle about a substantially vertical axis.

5. The vehicle (100) of any preceding claim, wherein the vehicle has a maximum width of 3 metres or over, the warning signs (101a, 101b; 301b; 801b) being arranged to extend to the maximum width on opposing sides of the vehicle.

6. The vehicle (100) of any preceding claim, wherein the vehicle is a tractor and the arms (202; 302; 802) extend outwardly from a cab of the tractor.

7. The vehicle (100) of any preceding claim, wherein the visual monitor (915, 916a, 916b) comprises first and second visual monitors (916a, 916b) mounted to respective left and right front pillars of the cab, each of the first and second visual monitors configured to receive an image from a respective one of the camera assemblies (203; 303; 503; 603; 803).

8. The vehicle (100) of any preceding claim, wherein the cab comprises a driver's seat that is rotatable between a forward facing configuration and a rearward facing configuration, wherein a control system (914) is configured to display the images from each camera assembly (203; 303; 503; 603; 803) on the visual monitor (915, 916a, 916b) when in the driver's seat rearward facing configuration.

9. The vehicle (100) of claim 8, wherein the visual monitor (915) is rotatable with the driver's seat.

10. The vehicle (100) of claim 7, wherein the visual monitor comprises first and second visual monitors mounted to respective left and right rear pillars of the cab, each of the first and second visual monitors configured to receive an image from a respective one of the camera assemblies (203; 303; 503; 603; 803) when the driver's seat is in the rearward facing configuration.

11. The vehicle (100) of any one of claims 8 to 10, wherein the camera assembly (203; 303; 503; 603; 803) is configured to provide a field of view in front of the vehicle in at least one other configuration and wherein the control system (914) is configured to display images of the field of view in front of the vehicle from each camera assembly on the visual monitor (915, 916a, 916b) when in the driver's seat is in the rearward facing configuration.

12. The vehicle (100) of any of claims 6 to 11, wherein the arms (202; 302; 802) extend over left and right rear wheel fenders (107a, 107b) of the vehicle.

13. The vehicle (100) of any preceding claim, wherein each camera assembly (203; 303; 503; 603; 803) is rotatably mounted to an end of a respective arm (202; 302; 802) and wherein, optionally, each camera assembly is rotatable relative to a respective arm about a substantially horizontal camera rotation axis.

14. The vehicle (100) of any preceding claim, wherein each camera assembly (203; 303; 503; 603; 803) comprises a first camera (503a) having a rear facing field of view and a second camera (503b) having a forward facing field of view.

## Patentansprüche

1. Fahrzeug (100), umfassend:
einen ersten und zweiten Arm (202; 302; 802), die sich von einer linken Seite bzw. einer rechten Seite des Fahrzeugs erstrecken, wobei jeder der Arme ein Warnschild (101a, 101b; 301b; 801b) an einem äußeren Ende aufweist, wobei das Warnschild eine Markierung für ein Fahrzeug mit Überbreite ist;
**dadurch gekennzeichnet, dass**:
jeder der Arme eine Kameraanordnung (203; 303; 503; 603; 803) aufweist, die angrenzend an eine Außenkante (204) des Warnschilds angeordnet ist, wobei die Kameraanordnung dazu ausgelegt ist, ein Sichtfeld vorzusehen, das zumindest in einer Konfiguration hinter das Fahrzeug gerichtet ist, und
das Fahrzeug (100) ferner einen Monitor (915) umfasst, der sich in einer Fahrzeugkabine befindet und dazu ausgelegt ist, Bilder von jeder Kameraanordnung zu empfangen.

2. Fahrzeug (100) nach Anspruch 1, wobei jeder Arm (202; 302; 802) drehbar am Fahrzeug montiert ist, sodass das Warnschild (101a, 101b; 301b; 801b) und die Kameraanordnung (203; 303; 503; 603; 803) nach innen zum Fahrzeug hin in eine verstaute Position und nach außen vom Fahrzeug weg in eine ausgefahrene Position klappbar ist, wobei der Arm und die Kameraanordnung so ausgelegt sind, dass die Kameraanordnung ein Sichtfeld vorsieht, das zumindest in einer Konfiguration, wenn sich der Arm in der ausgefahrenen Position befindet, hinter das Fahrzeug gerichtet ist.

3. Fahrzeug (100) nach Anspruch 1 oder Anspruch 2, wobei jedes Warnschild (101a, 101b; 301b; 801b) drehbar an einem jeweiligen der Arme (202; 302; 802) montiert ist, sodass das Warnschild und die Kameraanordnung (203; 303; 503; 603; 803) nach innen zum Fahrzeug hin in eine verstaute Position und nach außen vom Fahrzeug weg in eine ausgefahrene Position klappbar ist, wobei der Arm und die Kameraanordnung so ausgelegt sind, dass die Kameraanordnung ein Sichtfeld vorsieht, das zumindest in einer Konfiguration, wenn sich der Arm in der ausgefahrenen Position befindet, hinter das Fahrzeug gerichtet ist.

4. Fahrzeug (100) nach Anspruch 2, wobei jeder Arm (202; 302; 802) zur Drehung relativ zum Fahrzeug um eine im Wesentlichen vertikale Achse drehbar montiert ist.

5. Fahrzeug (100) nach einem der vorhergehenden Ansprüche, wobei das Fahrzeug eine maximale Breite von 3 Metern oder mehr aufweist, wobei die Warnschilder (101a, 101b; 301b; 801b) so angeordnet sind, dass sie sich auf gegenüberliegenden Seiten des Fahrzeugs bis zur maximalen Breite erstrecken.

6. Fahrzeug (100) nach einem der vorhergehenden Ansprüche, wobei das Fahrzeug ein Traktor ist und sich die Arme (202; 302; 802) von einer Traktorkabine nach außen erstrecken.

7. Fahrzeug (100) nach einem der vorhergehenden Ansprüche, wobei der Monitor (915, 916a, 916b) einen ersten und einen zweiten Monitor (916a, 916b) umfasst, die an einer jeweiligen linken und rechten vorderen Kabinensäule montiert sind, wobei der erste und zweite Monitor jeweils dazu ausgelegt sind, ein Bild von einer jeweiligen Kameraanordnung (203; 303; 503; 603; 803) zu empfangen.

8. Fahrzeug (100) nach einem der vorhergehenden Ansprüche, wobei die Kabine einen Fahrersitz umfasst, der zwischen einer nach vorne gerichteten Konfiguration und einer nach hinten gerichteten Konfiguration drehbar ist, wobei ein Steuersystem (914) dazu ausgelegt ist, die Bilder von jeder Kameraanordnung (203; 303; 503; 603; 803) auf dem Monitor (915, 916a, 916b) anzuzeigen, wenn sich der Fahrersitz in der nach hinten gerichteten Konfiguration befindet.

9. Fahrzeug (100) nach Anspruch 8, wobei der Monitor (915) mit dem Fahrersitz drehbar ist.

10. Fahrzeug (100) nach Anspruch 7, wobei der Monitor einen ersten und einen zweiten Monitor umfasst, die an einer jeweiligen linken und rechten hinteren Kabinensäule montiert sind, wobei der erste und zweite Monitor jeweils dazu ausgelegt sind, ein Bild von einer jeweiligen Kameraanordnung (203; 303; 503; 603; 803) zu empfangen, wenn sich der Fahrersitz in der nach hinten gerichteten Konfiguration befindet.

11. Fahrzeug (100) nach einem der Ansprüche 8 bis 10, wobei die Kameraanordnung (203; 303; 503; 603; 803) dazu ausgelegt ist, ein Sichtfeld vor dem Fahrzeug in mindestens einer anderen Konfiguration vorzusehen, und wobei das Steuersystem (914) dazu ausgelegt ist, Bilder des Sichtfelds vor dem Fahrzeug von jeder Kameraanordnung auf dem Monitor (915, 916a, 916b) anzuzeigen, wenn sich der Fahrersitz in der nach hinten gerichteten Konfiguration befindet.

12. Fahrzeug (100) nach einem der Ansprüche 6 bis 11, wobei sich die Arme (202; 302; 802) über einen linken und rechten hinteren Radkotflügel (107a, 107b) des Fahrzeugs erstrecken.

13. Fahrzeug (100) nach einem der vorhergehenden Ansprüche, wobei jede Kameraanordnung (203; 303; 503; 603; 803) an einem Ende eines jeweiligen Arms (202; 302; 802) drehbar montiert ist und wobei optional jede Kameraanordnung relativ zu einem jeweiligen Arm um eine im Wesentlichen horizontale Kameradrehachse drehbar ist.

14. Fahrzeug (100) nach einem der vorhergehenden Ansprüche, wobei jede Kameraanordnung (203; 303; 503; 603; 803) eine erste Kamera (503a) mit einem nach hinten gerichteten Sichtfeld und eine zweite Kamera (503b) mit einem nach vorne gerichteten Sichtfeld umfasst.

## Revendications

1. Véhicule (100) comprenant :
des premier et second bras (202 ; 302 ; 802) s'étendant respectivement à partir d'un côté gauche et d'un côté droit du véhicule, chacun des bras présentant un un élément de signalisation d'avertissement (101a, 101b ; 301b ; 801b) au niveau d'une extrémité extérieure, l'élément de signalisation d'avertissement étant une indication de véhicule large ;
**caractérisé en ce que** :
chacun des bras comporte un ensemble caméra (203 ; 303 ; 503 ; 603 ; 803) situé près d'un bord extérieur (204) de l'élément de signalisation d'avertissement, l'ensemble caméra étant conçu pour fournir un champ de vision dirigé derrière le véhicule au moins dans une configuration, et le véhicule (100) comprend en outre un écran (915) situé dans une cabine du véhicule et conçu pour recevoir des images de chaque ensemble caméra.

2. Véhicule (100) selon la revendication 1, dans lequel chaque bras (202 ; 302 ; 802) est monté de manière rotative sur le véhicule de telle sorte que l'élément de signalisation d'avertissement (101a, 101b ; 301b ; 801b) et l'ensemble caméra (203 ; 303 ; 503 ; 603 ; 803) soient pliables vers l'intérieur en direction du véhicule jusqu'à une position repliée et dépliables vers l'extérieur du véhicule jusqu'à une position déployée, le bras et l'ensemble caméra étant conçus de telle sorte que l'ensemble caméra fournisse un champ de vision dirigé derrière le véhicule dans au moins une configuration lorsque le bras est dans la position déployée.

3. Véhicule (100) selon la revendication 1 ou la revendication 2, dans lequel chaque élément de signalisation d'avertissement (101a, 101b ; 301b ; 801b) est monté de manière rotative sur un bras respectif parmi les bras (202 ; 302 ; 802) de telle sorte que l'élément de signalisation d'avertissement et l'ensemble caméra (203 ; 303 ; 503 ; 603 ; 803) soient pliables vers l'intérieur en direction du véhicule jusqu'à une position repliée et dépliables vers l'extérieur du véhicule jusqu'à une position déployée, le bras et l'ensemble caméra étant conçus de telle sorte que l'ensemble caméra fournisse un champ de vision dirigé derrière le véhicule dans au moins une configuration lorsque le bras est dans la position déployée.

4. Véhicule (100) selon la revendication 2, dans lequel chaque bras (202 ; 302 ; 802) est monté de manière rotative pour tourner par rapport au véhicule autour d'un axe sensiblement vertical.

5. Véhicule (100) selon l'une quelconque des revendications précédentes, le véhicule présentant une largeur maximale de 3 mètres ou plus, les éléments de signalisation d'avertissement (101a, 101b ; 301b ; 801b) étant agencés pour s'étendre jusqu'à la largeur maximale sur des côtés opposés du véhicule.

6. Véhicule (100) selon l'une quelconque des revendications précédentes, le véhicule étant un tracteur et les bras (202 ; 302 ; 802) s'étendant vers l'extérieur à partir d'une cabine du tracteur.

7. Véhicule (100) selon l'une quelconque des revendications précédentes, dans lequel l'écran (915, 916a, 916b) comprend des premier et second écrans (916a, 916b) montés sur des montants avant gauche et droit respectifs de la cabine, chacun des premier et second écrans étant conçu pour recevoir une image provenant d'un ensemble respectif parmi les ensembles caméras (203 ; 303 ; 503 ; 603 ; 803).

8. Véhicule (100) selon l'une quelconque des revendications précédentes, dans lequel la cabine comprend un siège de conducteur qui peut tourner entre une configuration tournée vers l'avant et une configuration tournée vers l'arrière, dans lequel un système de commande (914) est conçu pour afficher les images de chaque ensemble caméra (203 ; 303 ; 503 ; 603 ; 803) sur l'écran (915, 916a, 916b) dans la configuration tournée vers l'arrière du siège de conducteur.

9. Véhicule (100) selon la revendication 8, dans lequel l'écran (915) peut tourner avec le siège de conducteur.

10. Véhicule (100) selon la revendication 7, dans lequel l'écran comprend des premier et second écrans montés sur des montants arrière gauche et droit respectifs de la cabine, chacun des premier et second écrans étant conçu pour recevoir une image provenant d'un ensemble respectif parmi les ensembles caméras (203 ; 303 ; 503 ; 603 ; 803) lorsque le siège de conducteur est dans la configuration tournée vers l'arrière.

11. Véhicule (100) selon l'une quelconque des revendications 8 à 10, dans lequel l'ensemble caméra (203 ; 303 ; 503 ; 603 ; 803) est conçu pour fournir un champ de vision devant le véhicule dans au moins une autre configuration et dans lequel le système de commande (914) est conçu pour afficher des images du champ de vision devant le véhicule provenant de chaque ensemble caméra sur l'écran (915, 916a, 916b) lorsque le siège de conducteur est dans la configuration tournée vers l'arrière.

12. Véhicule (100) selon l'une quelconque des revendications 6 à 11, dans lequel les bras (202 ; 302 ; 802) s'étendent au-dessus des ailes de roue arrière gauche et droite (107a, 107b) du véhicule.

13. Véhicule (100) selon l'une quelconque des revendications précédentes, dans lequel chaque ensemble caméra (203 ; 303 ; 503 ; 603 ; 803) est monté de manière rotative sur une extrémité d'un bras respectif (202 ; 302 ; 802) et dans lequel, facultativement, chaque ensemble caméra peut tourner par rapport à un bras respectif autour d'un axe de rotation de caméra sensiblement horizontal.

14. Véhicule (100) selon l'une quelconque des revendications précédentes, dans lequel chaque ensemble caméra (203 ; 303 ; 503 ; 603 ; 803) comprend une première caméra (503a) ayant un champ de vision orienté vers l'arrière et une seconde caméra (503b) ayant un champ de vision orienté vers l'avant.
